# EUROPÄISCHE PATENTANMELDUNG

(11) **EP 0 682 991 A2**
(43) Veröffentlichungstag der Anmeldung: **22.11.1995**
(21) Anmeldenummer: 95106625.7
(22) Anmeldetag: 03.05.1995
(51) Int. Cl.: B07C 5/342

(54) **Sortierautomat zur Sortierung bzw. Klassifikation von Kleinprodukten der pharmazeutischen und der Süsswarenindustrie nach Form und Farbe**

(30) Priorität: 14.05.1994 DE 4417015
(71) Anmelder: MASCHIMPEX GMBH, D-88046 Friedrichshafen (DE)
(72) Erfinder: Weier, Detlef, Dipl. Ing., D-88633 Heiligenberg (DE)
(74) Vertreter: Riebling, Peter, Dr.-Ing., Patentanwalt

(57) **Zusammenfassung**

Die vorliegenden Erfindung betrifft einen Sortierautomaten zur Sortierung bzw. Klassifizierung von Kleinprodukten der pharmazeutischen und der Süßwarenindustrie nach mittels einer optoelektronischen Mustererkennung. Der Sortierautomat umfaßt eine Vibrationszuführung, in welcher die zu sortierenden Produkte vereinzelt werden, um diese auf eine Zuführvorrichtung aufzugeben, welche die vereinzelten Produkte durch einen Strahlengang einer Kamera befördert, mittels welcher jeweils das Produkt optisch erfaßt und in elektronische Signale verschlüsselt wird, anhand welcher mittels einer entsprechenden Elektronik eine Mustererkennung durchgeführt wird, um nicht erkannte Produkte mit unzulässigen Abweichungen entsprechend auszuscheiden.
Um einen derartigen Sortierautomaten derartig weiterzuentwickeln, daß die Formgebung des Produktes mit wesentlich höherer Verarbeitungsgeschwindigkeit klassifizierbar ist und dabei eine eindeutige Farbaussage getroffen werden kann, ist eine Farb-Zeilen-Kamera vorgesehen, welche den Strahlengang der Kamera in Vorschubrichtung des Produktes diesen über eine bestimmte Förderstrecke nachführt, wobei das Produkt während des Durchförderns durch den nachgeführten Strahlengang um eine zur Abtastzeile parallele Achse gedreht wird.

## Beschreibung

Die Erfindung betrifft einen Sortierautomaten nach dem Oberbegriff des Patentanspruches 1.

Derartige Sortierautomaten sind in vielfältigen Ausführungsformen bekannt geworden und verwenden in der Regel eine sogenannte optoelektronische Mustererkennung des Produktes. Derartige Sortierautomaten werden in der pharmazeutischen Industrie und in der Süßwarenindustrie verwendet, um eine gut/schlecht Aussage von hergestellten Produkten zu treffen. Es ist bisher bekannt, diese Produkte in einem Vibratortopf anzuordnen und über eine Zuführeinrichtung einer optischen Erkennung zuzuführen.

Hierbei ist es bekannt, die Zuführvorrichtung als Förderband auszubilden und die Produkte durch den Strahlengang einer CCD-Kamera hindurch zu befördern. Die Kamera erfaßt das dargebotene Produkt und es wird elektronisch aus dem Signal der CCD-Matrix eine Musterkennung durchgeführt in der Weise, daß unzulässige Form und Farbgebungen des Produktes zu der Erzeugung eines Ausscheidungssignales führen, welches die Fördereinrichtung derart ansteuert, daß das erkannte und klassifizierte Produkt wahlweise entsprechend den Ergebnissen der Klassifikation auf unterschiedliche Ausscheidebahnen befördert wird, wo gute Produkte von den als schlecht erkannte Produkte abgeschieden werden.

Bei dem bekannten Sortierautomaten besteht der Nachteil, daß nur eine relativ geringe Verarbeitungsgeschwindigkeit geleistet werden kann, denn die Auswertung des von der Kamera erkannten Bildes mit Hilfe elektronischer Mustererkennunsprogramme stößt auf große Schwierigkeiten, die dazu führen, daß es einer relativ langen Prozeßzeit bedarf. Es ist zwar bekannt, daß zur Untersuchung der Produkte mit einer Vielzahl von Kameras von allen Seiten her zu begutachten, wobei die Kameras feststehen und das Produkt nicht rotiert wird. Damit besteht aber der Nachteil, daß die Kameras auch Übergangsbereiche auf dem Produkt erfassen, die von Lichtreflexen und von der Lichtfarbe selbst überlagert sind, so daß die Auswertung in diesen Bereichen nicht optimal ist.

Bisher war es nicht bekannt, Farb, Geometrie, verschiedene Oberflächeneigenschaften und Abweichungen von gewünschten, vorgegebenen Eigenschaften einwandfrei zu erkennen.

Der Erfindung liegt deshalb die Aufgabe zugrunde, einen Sortierautomaten der eingangs genannten Art so weiterzubilden, daß mit wesentlich höherer Verarbeitungsgeschwindigkeit die Formgebung des Produktes von allen Seiten her erkennbar und klassifizierbar ist und daß eine eindeutige Farbaussage getroffen werden kann.

Zur Lösung der gestellten Aufgabe ist die Erfindung durch die technische Lehre des Anspruches 1 gekennzeichnet.

Wesentliches Merkmal der Erfindung ist, daß die optische Mustererkennung mit einer Farb-Zeilen-Kamera erfolgt, in deren Strahlengang mindestens ein bewegbarer Spiegel angeordnet ist, welcher Spiegel den Strahlengang der Kamera in Vorschubrichtung des Produktes diesem nachführt.

In einer anderen Ausgestaltung der Erfindung ist es vorgesehen, statt eines bewegbaren Spiegels eine bewegbare Kamera vorzusehen, welche sich synchron über eine bestimmte Strecke mit der Transportrichtung des Produktes (transversal) bewegt.

Die Sortierung erfolgt hierbei anhand verschiedener Kriterien wie Farbe, Geometrie, Oberflächenbeschaffenheit, anhand eines oder mehrerer Aufdrucke auf dem Produkt, Schwarz-Weiß-Kontrasten, Oberflächenform, Verschmutzung, Fehlern oder Beschädigungen des Produkts. Es kann nach einem oder mehreren dieser Kriterien sortiert werden. Die Fehlerwichtung ist hierbei einstellbar. So kann ein Sollwert mit einem bestimmten Toleranzbereich vorgegeben werden, in den das oder die jeweils gemessenen Kriterien fallen müssen. Hierbei sind Sollwert und Toleranzbereich einstellbar.

So kann beispielsweise ein Fremdprodukt, ein Riß, ein falscher Aufdruck, eine Delle oder Verschmutzung eines ansonsten einwandfreien Produkts erkannt werden. Ebenso können Beschichtungsfehler, Farbfehler und andere Abweichungen erkannt werden.

Wesentliches Merkmal der Erfindung ist also zunächst die Verwendung einer Farb-Zeilen-Kamera, was den Vorteil hat, daß lediglich eine zeilenförmige Abtastung des Produktes stattfindet, wodurch wesentlich weniger Bilddaten zu erfassen sind als vergleichsweise bei einer Matrix-Kamera. Auf diese Weise kann die gesamte elektronische Mustererkennung wesentlich schneller arbeiten, weil nur ein Bruchteil der zu verarbeitenden Daten anfällt, wie vergleichesweise bei einer Matrix-Kamera.

Bei Verwendung einer Matrix-Kamera würden ein Vielfaches mehr an Daten anfallen als vergleichsweise bei der erfindungsgemäßen Farb-Zeilen-Kamera.

Ein weiteres wesentliches Merkmal der Erfindung ist, daß das Produkt während des Durchförderns durch den in Vorschubrichtung nachgeführten Strahlengang gleichzeitig um seine Längsachse gedreht wird, was im wesentlichen rotationssymmetrische Produkte voraussetzt.

Damit ist es nun erstmals möglich, daß man das Produkt im Bereich seiner gesamten Mantelfläche mit einer einzigen Farb-Zeilen-Kamera betrachten und begutachten kann, ohne daß es aufwendiger Anordnungen bedarf. Wesentliches Merkmal ist also die Drehung des Produktes bei der Durchführung durch den Strahlengang der Farb-Zeilen-Kamera um seine Längsachse.

Der damit verbundene Vorteil liegt darin, daß das Produkt nun seitlich von Lichtquellen angestrahlt werden kann und die Kamera praktisch senkrecht und im Winkel zu den Lichtquellen das Produkt betrachten kann. Damit ergibt sich der Vorteil, daß störende Lichtreflexe nicht mehr das Kamerabild beeinträchtigen, denn die Kamera untersucht nur einen ganz geringen Oberflächenanteil des Produktes, dort wo Lichtreflexe nicht stören.

Nachdem erfindungsgemäß das Produkt rotiert wird und die Kamera bezüglich dieser Rotation feststeht, ergibt sich der weitere Vorteil, daß Rotationsanomalien des Produktes leicht über die Kamera erfaßbar sind. Dies ist beispielsweise mit feststehenden Kameras, welche ein feststehendes Produkt von allen Seiten her betrachten nicht möglich.

Durch den Transport des Produktes zwischen definierten Fächern einer bewegten Rollenbahn ergibt sich der Vorteil, daß das Produkt lagenrichtig und verkantungsfrei geführt wird und es daher nicht notwendig ist, eine Verkantung bei der Bildauswertung in der Kamera meßtechnisch zu korrigieren. Weiterer Vorteil ist, daß wegen der verkantungsfreien Führung auch keine störenden Lichtreflexe auftreten, die ansonsten bei Anordnungen des Standes der Technik bei sich verkantenden Produkten in Kauf genommen werden müssen.

Bei der Bilddatenverarbeitung von zweifarbigen Produkten (z.B. Kapseln mit unterschiedlich farbigen Kappen oder Tabletten) ergibt sich der Vorteil, daß nach der Erfindung das Produkt unter Kamerabeobachtung rotiert wird und daß daher eine Abweichung (z. B. schief aufgesetzte Kappe, verzogener Kapselkörper) durch Beobachtung der farblich abweichenden Flächengrenze der Kapsel leicht erkannt werden.

Das dritte wesentliche Merkmal der Erfindung ist, daß der Strahlengang der Farb-Zeilen-Kamera dem Produkt nachgeführt und synchronisiert wird derart, daß die Kamera praktisch eine stillstehendes Produkt sieht, welche bei dem Durchführen durch den nachgeführten Strahlengang um seine Längsachse gedreht wird.

Bei der Verwendung eines derartigen Spiegels gibt es mehrere bevorzugte Ausführungsformen.

In einer ersten Ausführungsform wird es hierbei bevorzugt, wenn ein Transversalspiegel verwendet wird, der um seine Längsachse gedreht wird. Die Verwendung eines Transversalspiegels hat den Vorteil, daß seine Umdrehung relativ leicht mit der Vorschubbewegung des Rollenbandes synchronisierbar ist und daß hohe Verarbeitungsgeschwindigkeiten möglich sind.

In einer zweiten Ausführungsform wird der Transversalspiegel durch einen schwenkbaren Polygonspiegel ersetzt, der um seine Mittenlängsachse schwenkbar ausgebildet ist.

In einer dritten Ausführungsform ist der Spiegel linear verschieblich angeordnet. Es ist aber ebenfalls möglich, die Kamera alternativ oder zusätzlich verschibelich anzubringen.

Es wird also dem Produkt eine translatorische Bewegung aufgrund der Förderung auf einem Rollenband und zusätzlich eine rotatorische Bewegung durch Drehung des Produktes um seine Längsachse mitgeteilt und diese sich überlagernden Bewegungen werden von der Farb-Zeilen-Kamera erkannt.

Hierbei wird es bevorzugt, wenn nicht nur ein einziges Produkt durch den Strahlengang der Kamera transportiert wird, sondern wenn mehrere Produkte parallel zueinander verlaufen, auf mehreren Spuren (Bahnspuren) der Rollenbahn durch den Strahlengang der Kamera transportiert werden. Auf diese Weise wird die Verarbeitungsgeschwindigkeit des erfindungsgemäßen Sortierautomaten vervielfacht, denn es können mit einem einzigen Auslesevorgang beispielsweise 1 bis 10 Spuren gleichzeitig ausgelesen werden.

Selbstverständlich ist auch eine Vervielfachung der Rollenbahn möglich, wobei dann jeder Rollenbahn eine weitere Kamera zugeordnet ist, so daß nicht nur eine einzige Kamera eine mehrspurige Rollenbahn vermißt, sondern daß jeder Kamera eine jeweils mehrspurige Rollenbahn zugeordnet ist.

In der Regel verwendet man zwei verschiedene Kameras, wobei jeder Kamera z. B. sechs Bahnspuren zugeordnet sind, so daß hierdurch eine sehr hohe Verarbeitungsgeschwindigkeit erreicht wird.

Wegen der gesteuerten Vorbeiführung des Produktes durch den Strahlengang der jeweiligen Kamera ist es nun erstmals möglich, mit sehr hoher Auflösung die Oberfläche des Produktes zu erkennen und auszuwerten. Beispielsweise können somit Fehlprodukte der Produktkapsel, Geisterdrucke, verschiedene Verformungen der Produktkapsel (auch stirnseitige Verformungen), Formabweichungen, Farbabweichungen, Größenabweichungen und dgl. einwandfrei mit hoher Verarbeitungsgeschwindigkeit erkannt werden. Ebenso können Zerstörungen der Oberflächenstruktur erkannt werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellende Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1: : Schematisiert in Seitenansicht einen Sortierautomat nach der Erfindung;
- Figur 2: : Schematisiert die Auswertesituation in Seitenansicht;
- Figur 3: : Draufsicht auf die Rollenbahn;
- Figur 4: : Die Beleuchtungssituation;
- Figur 5: : Die Profilabwicklung des Produktes bei der Förderung durch den Strahlengang.

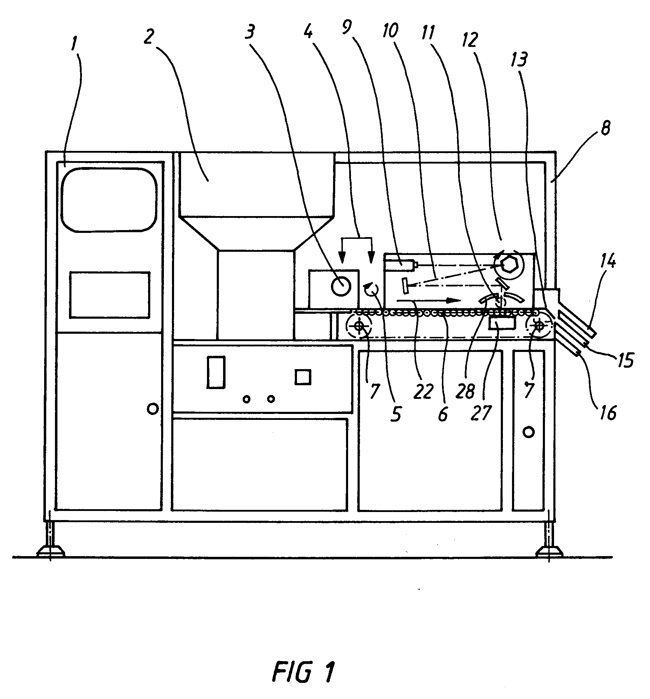

Gemäß Figur 1 besteht der Sortierautomat im wesentlichen aus einem Gehäuse 8, in dem ein Elektronikschaltschrank 1 angeordnet ist, dem eine Vibrationszuführung 2 zugeordnet ist. Die zu klassifizierenden und zu bewertenden Produkte werden in die Vibrationszuführung 2 eingegeben und dort vereinzelt. Sie verlassen die Vibrationszuführung 2 im Bereich einer Aufgabestation 3, wo die Produkte über eine Wendestation 4 so gedreht werden, daß sie quer zur Förderrichtung (Zuführung 22) einer Rollenbahn 6 auf der Rollenbahn 6 zu liegen kommen.

In der Wendestation 4 werden die Produkte um 90°, nämlich in Pfeilrichtung 5 gedreht.

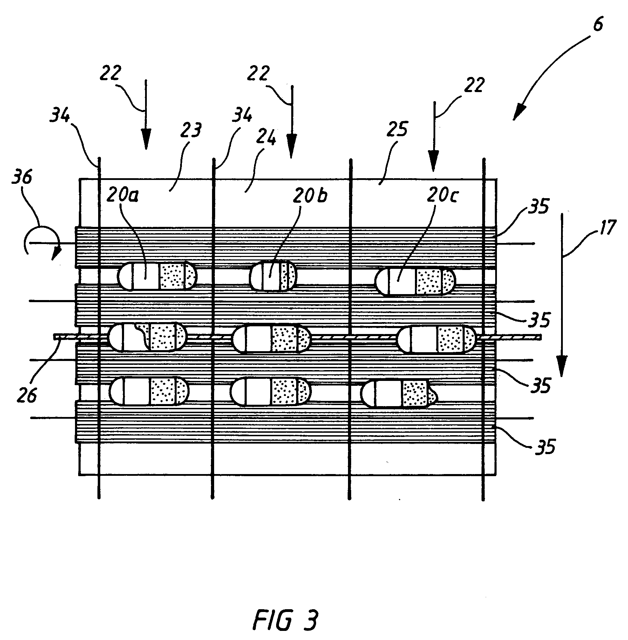

Die Rollenbahn 6 besteht aus mehreren Bahnspuren 23,24, 25, wobei jede Rolle 35 (Figur 3) um ihre Längsachse beispielsweise in Pfeilrichtung 36 zusätzlich drehend angetrieben ist.

Die zu klassifizierenden Produkte werden von der Wendestation 4 auf die Rollenbahn 6 aufgegeben, wobei die Rollenbahn über Umlenkrollen 7 endlos umläuft.

Oberhalb der Rollenbahn 6 ist mindestens eine Kamera 9 angeordnet, deren Strahlengang 10 bewegbar ist. Hierbei liegt im Strahlengang der feststehenden Kamera 9 ein Umlenkspiegel 12, der in der später zu beschreibenden Weise verstellbar ist.

Im Ausführungsbeispiel nach Figur 1 ist der Umlenkspiegel 12 als Polygonspiegel ausgebildet, der um seine Längsachse in Pfeilrichtung gedreht wird. Der Strahlengang der Kamera wird von diesem Polygonspiegel entsprechend abgelenkt und trifft auf einen ersten Umlenkspiegel, von dem aus der Strahlengang über einen zweiten Umlenkspiegel auf das zu klassifizierende Produkt am Meßort 11 trifft.

Die vorher erwähnten Umlenkspiegel sind nicht unbedingt lösungsnotwendig, es reicht aus, einen einzigen Umlenkspiegel 12 zu verwenden, wobei die anderen feststehenden Spiegel entfallen können.

Entsprechend der Klassifizierung des Produktes steuert das Klassifizierungssignal eine Ausscheidestation 13 an, welche das Produkt auf verschiedene Ausscheidebahnen 14,15,16 gelangen läßt. Über die obere Ausscheidebahn 14 werden beispielsweise die als schlecht erkannten Produkte ausgeschieden, während über die Ausscheidebahn 15 die als gut erkannten und über die Ausscheidebahn 16 die nicht erkannten Produkte ausgeschieden werden.

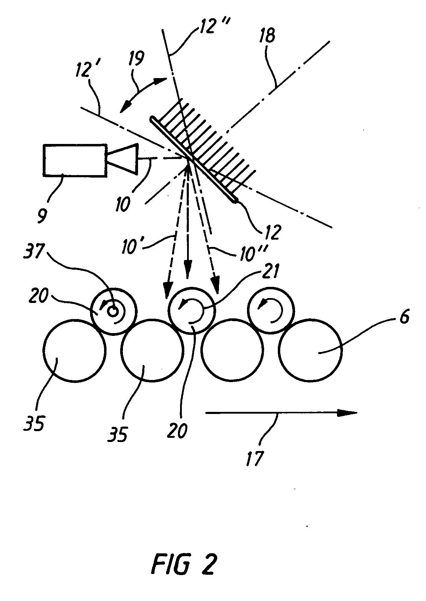

In Figur 2 werden die prinzipiellen Verhältnisse bei der Erfassung des Produktes näher beschrieben. Hierbei ist als Ausführungsform für den Umlenkspiegel 12 ein Transversal-Spiegel vorgesehen, der anstelle des vorher erwähnten Polygon-Spiegels verwendet werden kann.

Dieser Transversal-Spiegel (Umlenkspiegel 12) wird um seine Mittenachse 18 in den Pfeilrichtungen 19 verschwenkt, wobei er die Positionen 12,12',12'' einnimmt.

Dementsprechend wird der Strahlengang 10 der Kamera 9 auf das Produkt an den Stellen 10,10',10'' auftreffen und somit der Kamera ein praktisch stillstehendes Produkt darbieten, weil die Verschwenkung des Umlenkspiegels 12 so synchronisiert ist, daß der Strahlengang der Vorschubrichtung 17 der Rollenbahn nachgeführt wird und somit die Kamera ein stillstehendes Produkt sieht.

Der Strahlengang 10 der Kamera wird also dem Produkt so nachgeführt, daß die Rotationsachse 37 des Produktes 20 und die optische Achse des Kamerachips auf der Linie des optischen Strahlenganges 10 zusammenfallen, d.h. senkrecht zur Oberfläche des Produktes 20 sind.

Das Profil des Produktes 20 wird hierbei mehr als einmal ganz, d.h. um etwa 360° und mehr abgewickelt, bedingt durch den rotatorischen Antrieb der einzelnen Rollen 35, welche das Produkt 20 in Drehrichtung 21 drehend um die Rotationsachse 37 antreiben.

Anstelle des hier gezeigten Transversal-Spiegels kann auch der vorher in Figur 1 dargestellte Polygon-Spiegel als Umlenkspiegel 12 verwendet werden. Es kann auch stattdessen die Kamera nachgeführt werden.

Die Figur 3 zeigt die mehrbahnige Zuführung von Produkten 20a,20b,20c auf jeweils zugeordneten Bahnspuren 23,24, 25 der Rollenbahn 6.

Hierbei sind seitliche Begrenzungen 34 für jede Bahnspur 23-25 vorgesehen, um eine Seitenführung des Produktes 20 zu gewährleisten.

Ebenso kann das Produkt 20 gegen Abheben aus der Rollenbahn dadurch geschützt werden, indem oberhalb des Produktes (nicht zeichnerisch dargestellt) entsprechende Streifen angeordnet werden, die ein Abspringen oder Hochspringen des Produktes vermeiden.

Ebenso können seitliche Begrenzungen 34 nicht nur an den Bahnspuren 23-25 angebracht werden, welche taschenförmige Aufnahmen für das Produkt definieren, sondern es können darüber hinaus auch noch oberhalb der Rollenbahn 6 ortsfeste Streifen angeordnet werden, die ebenfalls eine Seitenführung des Produktes 20 gewährleisten.

Die Figur 3 zeigt im übrigen, daß sich die Abtastzeile 26 der Kamera 9 über die gesamte Breite der Rollenbahn 6 erstreckt, so daß mit einem einzigen Abtastvorgang im Ausführungsbeispiel nach Figur insgesamt gleichzeitig bis zu 10 Produkte 20a,20b,20c klassifiziert werden können.

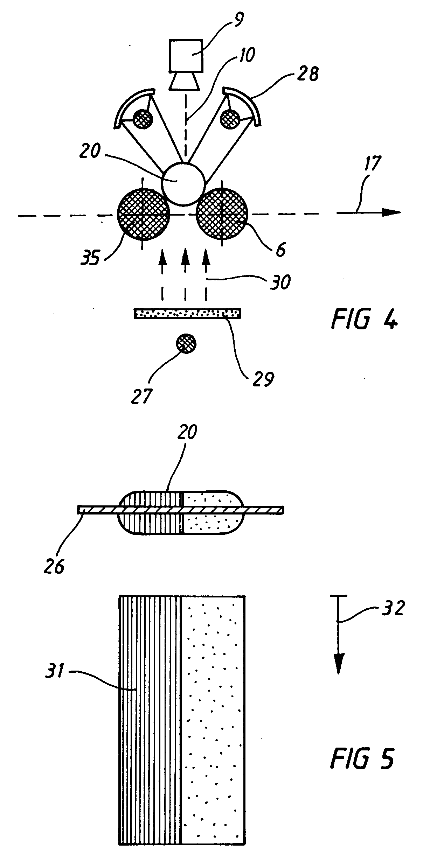

In Figur 4 sind Einzelheiten der Beleuchtungseinrichtung dargestellt, wobei gemäß Figur 1 eine untere Beleuchtungseinrichtung 27 vorhanden ist, der ein auswechselbarer Farbfilter 29 zugeordnet ist, so daß der Strahlengang 30 durch die Rollen 35 der Rollenbahn hindurch das produkt 20 von unten her anstrahlt.

Es ist ferner eine obere Beleuchtungseinrichtung 28 vorhanden, welche Beleuchtungskörper aufweist, deren Strahlengang von zugeordneten Spiegeln reflektiert wird, so daß ein diffuses weißes Auflicht auf das Produkt 20 erzeugt wird.

Oberhalb der oberen Beleuchtungseinrichtung 28 erstreckt sich dann der Strahlengang 10, der in der in Figur 1 beschriebenen Weise dann von der Kamera 9 erfaßt wird.

In Figur 5 ist eine Zeitabwicklung der Mantelfläche des Produktes dargestellt. Ausgehend von einer Zeitachse 32 bei der Zeit t = 0 "sieht" die Kamera eine abgewickelte Mantelfläche 31 des Produktes 20, weil sich dieses Produkt in der Abtastzeile dreht und gleichzeitig der Strahlengang in Vorschubrichtung 17 nachgeführt wird.

### ZEICHNUNGS-LEGENDE

- 1: Elektronikschaltschrank
- 2: Vibrationszuführung
- 3: Aufgabestation
- 4: Wendestation
- 5: Pfeilrichtung
- 6: Rollenbahn
- 7: Umlenkrolle
- 8: Gehäuse
- 9: Kamera
- 10,10',10'': Strahlengang
- 11: Meßort
- 12,12',12'': Umlenkspiegel
- 13: Ausscheidestation
- 14: Ausscheidebahn
- 15: "
- 16: "
- 17: Vorschubrichtung
- 18: Mittenachse
- 19: Pfeilrichtung
- 20,20a,b,c: Produkt
- 21: Drehrichtung
- 22: Zuführung
- 23: Bahnspur
- 24: "
- 25: "
- 26: Abtastzeile
- 27: Beleuchtungseinrichtung
- 28: "
- 29: Farbfilter
- 30: Strahlengang
- 31: Mantelfläche
- 32: Zeitachse
- 34: Begrenzung
- 35: Rolle
- 36: Pfeilrichtung
- 37: Rotationsachse

## Patentansprüche

1. Sortierautomat zur Sortierung bzw. Klassifikation von Kleinprodukten, insbesondere von Produkten der pharmazeutischen und Süßwarenindustrie, mittels einer optoelektronischen Mustererkennung mit
- einer Vibrationszuführung, in welchen die zu sortierenden Produkte vereinzelt werden,
- einer Zuführvorrichtung, welche die vereinzelten Produkte durch einen Strahlengang befördert, um mittels
- einer Kamera, jeweils das Produkt optisch zu erfassen und um elektronische Signale zu erhalten, anhand welcher mittels
- einer Elektronik eine Mustererkennung durchgeführt wird, die bei Abweichungen Produktes ein Ausscheidungssignal erzeugt, um fehlerhafte und nicht erkannte Produkte abzuscheiden,
**dadurch gekennzeichnet,** daß eine Farb-Zeilen-Kamera (9) vorgesehen ist, deren Strahlengang (10) bewegbar angeordnet ist derart, daß der Strahlengang (10) der Kamera (9) in Vorschubrichtung des Produktes (20) diesem über eine bestimmbare Förderstrecke nachgeführt wird, wobei das Produkt (20) während des Durchförderns durch den nachgeführten Strahlengang (10,10',10'') um eine zur
Abtastzeile (26) parallele Achse gedreht wird.

2. Sortierautomat nach Anspruch 1, **dadurch gekennzeichnet,** daß die Kamera und/oder ein Umlenkspiegel (12) synchron zur Vorschubbewegung des Produktes (10) nachführbar ist.

3. Sortierautomat nach Anspruch 1 oder 2, **dadurch gekennzeichnet,** daß die Kamera (9) und/oder ein Umlenkspiegel (12) über eine bestimmte Strecke synchron zum Produkt bewegt werden.

4. Sortierautomat nach Anspruch 1 oder 2, **dadurch gekennzeichnet,** daß der Spiegel (12) als Transversalspiegel ausgebildet ist, welcher um seine Mittenlängsachse schwenkbar ausgebildet ist.

5. Sortierautomat nach einem der Ansprüche 1 bis 4, **dadurch gekennzeichnet,** daß der Umlenkspiegel (12) als Polygonspiegel ausgebildet ist, welcher um seine Längsachse drehbar vorgesehen ist.

6. Sortierautomat nach einem oder mehreren der Ansprüche 1 bis 4, **dadurch gekennzeichnet,** daß mehrere Produkte (20,20a,20b,20c) parallel zueinander in mehreren Bahnen nebeneinander durch den Strahlengang (10) der Kamera (9) transportierbar vorgesehen sind.

7. Sortierautomat nach Anspruch 6, **dadurch gekennzeichnet,** daß mehrere Kameras (9) nebeneinander angeordnet vorgesehen sind, wobei jede Kamera (9) jeweils mehrere Bahnen vermißt.

8. Sortierautomat nach einem der Ansprüche 1 bis 7, **dadurch gekennzeichnet,** daß die Zuführeinrichtung (22) aus einer Wendestation (4) und einer Rollenbahn (6) mit quer zur Vorschubrichtung angeordneten Rollen (35) besteht.

9. Sortierautomat nach Anspruch 8, **dadurch** **gekennzeichnet,** daß die Rollen (35) um ihre Längsachse drehbar angeordnet sind.

10. Sortierautomat nach Anspruch 6 oder 7 und 8, **dadurch gekennzeichnet,** daß eine mehrbahnige Zuführung von Produkten (20,20a,20b,20c) auf jeweils zugeordneten Bahnspuren (23,24,25) einer Rollenbahn (6) vorgesehen ist.

11. Sortierautomat nach Anspruch 10, **dadurch gekennzeichnet,** daß seitliche Begrenzungen (34) für jede Bahnspur (23,24,25) vorgesehen sind.

12. Sortierautomat nach Anspruch 10, **dadurch gekennzeichnet,** daß ortsfeste Streifen oberhalb der Rollenbahn (6) vorgesehen sind.

13. Sortierautomat nach Anspruch 1, **dadurch gekennzeichnet,** daß eine untere Beleuchtungseinrichtung (27) unterhalb der Rollenbahn (6) vorgesehen ist, welcher ein Farbfilter (29) zugeordnet ist, um zwischen den Rollen (35) hindurch das Produkt (20) von unten her anzustrahlen.

14. Sortierautomat nach Anspruch 1, **dadurch gekennzeichnet,** daß eine obere Beleuchtungseinrichtung (28) mit Beleuchtungskörpern vorgesehen ist, deren Strahlengang derart reflektiert wird, daß ein diffuses weißes Auflicht auf das Produkt (20) erzeugbar ist.
